Europäisches Patentamt

**European Patent Office**

**Office européen des brevets**

(11) Numéro de publication : **0 049 676**
**B1**

# (12) FASCICULE DE BREVET EUROPÉEN

(45) Date de publication du fascicule du brevet :
**02.05.84**

(21) Numéro de dépôt : **81420142.2**

(22) Date de dépôt : **01.10.81**

(51) Int. Cl.³ : **B 01 D 11/00**

(54) **Procédé et colonne d'extraction par solvant.**

(30) Priorité : **02.10.80 FR 8021377**

(43) Date de publication de la demande :
**14.04.82 Bulletin 82/15**

(45) Mention de la délivrance du brevet :
**02.05.84 Bulletin 84/18**

(84) Etats contractants désignés :
**CH DE GB IT LI NL**

(56) Documents cités :
**AU-D- 6 003 565**
**DE-A- 2 340 566**
**DE-A- 2 653 214**
**DE-B- 1 024 489**
**US-A- 4 088 540**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Faugeras, Pierre**
**Villa 10 Monplaisir**
**F-30130 Pont Saint Esprit (FR)**
Inventeur : **Henry, Edouard**
**Villa 5 Monplaisir**
**F-30130 Pont Saint Esprit (FR)**
Inventeur : **Malaterre, Roger**
**Mas de Tardieu**
**F-07700 Saint Marcee d'Ardeche (FR)**
Inventeur : **Fremeaux, Pierre**
**8 Rue de Verdun Jonage**
**F-69330 Meyzieu (FR)**

(74) Mandataire : **Monnier, Guy et al**
**Cabinet Monnier 142-150 Cours Lafayette**
**F-69003 Lyon (FR)**

Jouve, 18, rue St-Denis, 75001 Paris, France

Procédé et colonne d'extraction par solvant

La présente invention se réfère aux colonnes qu'on utilise pour assurer la mise en contact d'un solvant avec un liquide ou un solide divisé en vue d'extraire de celui-ci certaines substances solubles dans le solvant. En général le point d'ébullition du solvant est bien inférieur à celui de la substance ou soluté qu'on désire extraire. Par ailleurs ce solvant est le plus souvent plus léger que le solide ou liquide à traiter. En ce qui concerne la colonne elle-même, elle comporte un garnissage intérieur approprié, tel que par exemple qu'une superposition de plateaux perforés et/ou tronqués, horizontaux ou inclinés, avec ou sans rebord. On lui applique de plus en plus une pulsation en vue d'améliorer le contact et d'assurer le cheminement par fluidisation dans le cas des solides divisés.

Le solvant enrichi en soluté est retiré de l'une des extrémités de la colonne (extrémité supérieure dans le cas le plus fréquent d'un solvant léger et d'un produit à traiter lourd). On le distille de façon à recueillir séparément le soluté recherché et le solvant pur qu'on recycle à l'extrémité opposée de la colonne considérée. Le réglage du débit de recyclage du solvant permet d'agir sur le temps de séjour du produit à traiter dans la colonne, mais bien entendu ce recyclage est lui-même limité par la capacité de l'appareil de distillation. Par ailleurs le problème de recyclage doit tenir compte de ce qu'avec certains solutés le solvant devient assez vite relativement visqueux à mesure qu'il renferme une plus grande proportion de ceux-ci.

Le brevet US-A-4 088 540 décrit une telle colonne destinée à désasphalter les résidus pétroliers. Ces résidus sont introduits en un point intermédiaire de la hauteur de la colonne, tandis que dans la partie basse de celle-ci l'on injecte un solvant léger. En raison de leur poids spécifique important les résidus descendent à contre-courant du solvant qui s'élève en dissolvant les huiles que ceux-ci renfermaient encore et en formant ainsi un soluté. La partie de la colonne située au-dessus du point d'introduction des résidus est chauffée et le solvant chargé de soluté s'y élève en se débarrassant complètement des résidus éventuellement entraînés. Il sort au sommet de la colonne pour aller aux appareils de séparation du soluté et du solvant, ce dernier étant recyclé, tandis que les résidus épuisés sont évacués par le pied de la colonne. Au point de vue technique on peut considérer qu'une telle colonne assure l'extraction des huiles à partir des résidus pétroliers.

Il est à noter que dans la colonne suivant US-A-4 088 540 il n'est pas prévu que le solvant puisse s'évaporer ou se vaporiser dans le haut de celle-ci. D'ailleurs si cela se produisait, les vapeurs ainsi formées devraient s'évacuer pour la tubulure de sortie de soluté prévue au sommet de la colonne et arriveraient ainsi à l'appareil de distillation ou autre destiné à assurer la séparation du solvant et du soluté, dont le fonctionnement serait totalement perturbé, puisqu'il tendrait à ne recevoir que de la vapeur de solvant au lieu d'un mélange de solvant liquide et de soluté.

Conformément à l'invention, dans un procédé pour l'extraction d'un soluté à partir d'un produit solide ou divisé, par le moyen d'un solvant plus léger que le produit et comportant un point d'ébullition inférieur à celui du soluté, à l'intérieur d'une colonne pulsée ou non, renfermant un garnissage à plateaux ou autres et dont la partie haute au moins est chauffée de manière à réaliser un gradient de température ascendant entre son pied et son sommet, le solvant chargé de soluté étant ensuite séparé par distillation et recyclé dans le pied de la colonne :

— on règle le chauffage à une valeur telle qu'il apparaisse vers ce sommet une vaporisation partielle du solvant, on recueille les vapeurs ainsi produites et on les condense ;

— et l'on recycle dans le pied de la colonne le condensat ainsi obtenu en même temps que le solvant pur séparé du soluté par distillation extérieurement à la colonne à la façon habituelle.

Il est préférable de ne chauffer que le haut de la colonne, par exemple sur son tiers supérieur. Le chauffage peut s'effectuer par le moyen d'une chemise entourant la colonne, solution qui présente l'avantage d'être aisément applicable aux installations existantes. Mais il est également possible de prévoir un chauffage par l'intérieur, par exemple au moyen d'un ou plusieurs tubes disposés dans l'axe de la colonne considérée.

La condensation des vapeurs de solvant peut s'effectuer dans la chambre généralement prévue au sommet de la colonne, au-dessus de la sortie du solvant enrichi. On dispose alors une cloison pour que le condensat ainsi obtenu ne retombe pas dans la colonne, mais puisse être évacué latéralement. Toutefois il est préférable de monter un condenseur séparé, disposé par exemple sur le côté. On prévoit bien entendu un refroidissement, ainsi qu'un dispositif tel qu'un clapet hydraulique en vue d'éviter que de la vapeur ne s'échappe avec le solvant enrichi.

Le dessin annexé, donné à titre d'exemple, permettra de mieux comprendre l'invention :

Figure 1 est une vue en coupe verticale schématisée d'une colonne d'extraction comportant application de l'invention.

Figure 2 indique de façon partielle une autre forme d'exécution.

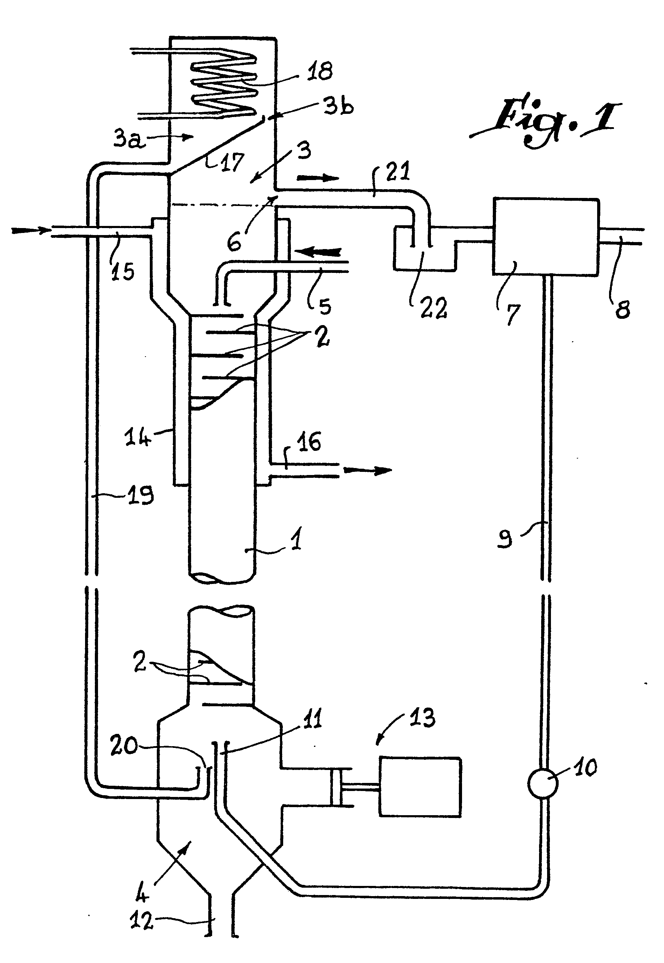

La colonne 1 représentée en fig. 1 renferme un garnissage intérieur fait de plateaux tronqués superposés 2. Elle comporte à son sommet une première chambre 3 et à son extrémité inférieure ou pied une seconde chambre 4. Le produit à traiter, qui dans le cas représenté est constitué par un liquide relativement lourd, arrive dans le bas de la chambre 3 par une canalisation d'entrée 5. Au-dessus du débouché de celle-ci il est prévu une sortie latérale 6 destinée au solvant enrichi, lequel parvient ainsi à un appareil de distillation 7. Dans ce dernier le soluté est séparé du solvant et est évacué par une canalisation 8, tandis que le solvant pur, convenablement condensé, est recyclé par une canalisation 9 dans la chambre inférieure 4. Ce recyclage est assuré par une pompe 10 et la canalisation 9 est raccordée à une tuyère axiale 11 orientée en direction du haut de façon à éviter au maximum de gêner la séparation et la descente du liquide lourd épuisé qui s'évacue par la tubulure de sortie 12 prévue au bas de la chambre 4, c'est-à-dire au pied de la colonne, équipée bien entendu de moyens évitant la vidange totale de cette colonne (vanne convenablement commandée, pompe volumétrique, sas, etc...).

La chambre inférieure 4 renferme encore un pulsateur 13 de n'importe quel type approprié.

En vue de la mise en œuvre du procédé suivant l'invention, à la colonne telle que décrite jusqu'ici, et qui est en soit de type classique, on a fait comporter les dispositions supplémentaires suivantes :

Tout d'abord autour de sa partie supérieure (sur environ le tiers de sa hauteur en direction du bas à partir de la première chambre 3), on lui a fait comporter une chemise chauffante 14 avec entrée 15 et sortie 16, dans laquelle on fait circuler un fluide caloporteur approprié (eau chaude, vapeur sous basse pression, etc...), de manière que le mélange liquide qui se trouve dans le bas de la chambre 3 soit amené à une température égale ou à tout le moins très voisine du point d'ébullition du solvant. Comme montré, cette chemise s'élève préférablement au moins jusqu'au niveau de la sortie 6. Bien entendu la paroi extérieure de la chemise 14 peut être calorifugée pour limiter les pertes de chaleur.

En second lieu l'on a disposé dans le haut de la chambre supérieure 3 une cloison inclinée 17 qui y délimite un espace supérieur 3a dans lequel on a monté un serpentin refroidisseur 18. Comme montré, le bord supérieur de la cloison 17 ménage un passage de liaison 3b de section notable.

Du point de jonction entre le bas de la cloison 17 et la paroi de la chambre 3 l'on a fait partir une canalisation 19 qui descend dans la chambre inférieure 4 et y débouche par une extrémité 20 orientée en direction du haut au voisinage immédiat de la tuyère 11.

Enfin sur la canalisation 21 qui relie la sortie 6 à l'appareil à distiller 7 on a interposé un clapet hydraulique ou siphon 22.

Dans ces conditions le solvant qui se trouve dans le haut de la colonne et dans le bas de la chambre 3 au-dessus de la sortie 6, se vaporise en partie par ébullition ou évaporation, ses vapeurs traversent le passage 3b et se condensent au contact du serpentin 18, parcouru par exemple par un courant d'eau froide. Le solvant pur ainsi condensé s'écoule sur la cloison 17 (à part la quantité négligeable qui retombe sur le passage 3b), descend par la canalisation 19 et sort en 20 pour se mélanger au solvant recyclé à partir de l'appareil de distillation 7. Il y a donc double recyclage.

La colonne ainsi équipée conformément à l'invention comporte les avantages suivants :

1. Pour une même capacité de l'appareil à distiller 7 on peut accroître le débit de solvant pur recyclé, ce qui est avantageux en ce qui concerne le temps de séjour du liquide à traiter à l'intérieur de la colonne.

2. Pour un même débit de recyclage, le solvant envoyé à l'appareil de distillation 7 est plus concentré en soluté, de sorte que le travail exigé de cet appareil se trouve réduit.

3. Dans le cas où le soluté tend à rendre le solvant visqueux, le chauffage du haut de la colonne, c'est-à-dire de la partie de celle-ci où le solvant est le plus chargé en soluté, abaisse cette viscosité et en diminue les inconvénients en ce qui concerne le fonctionnement hydraulique de la colonne.

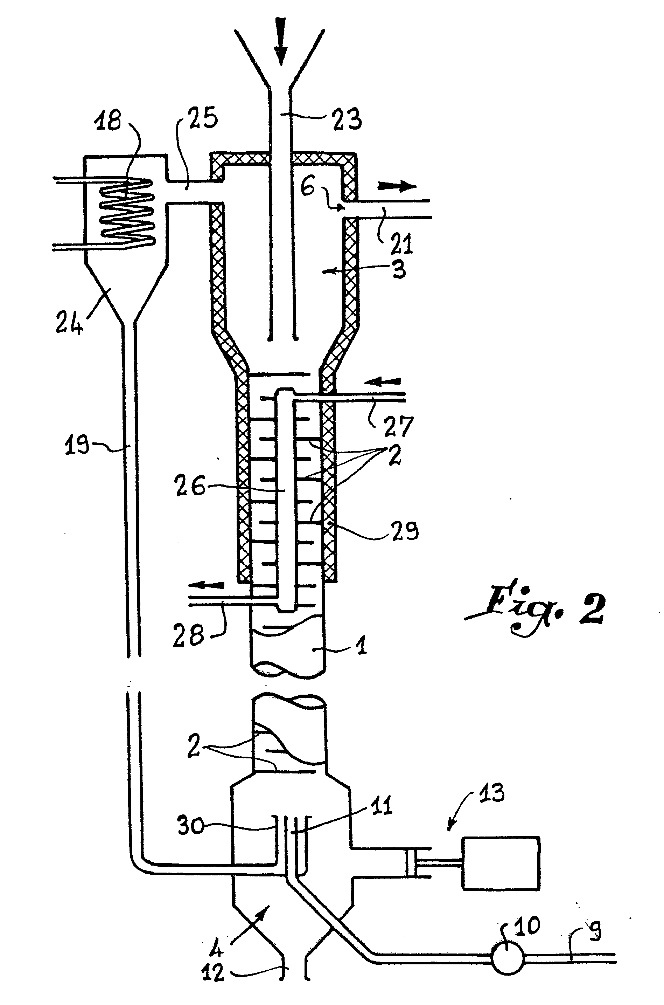

La forme d'exécution de fig. 2 se distingue de celle de fig. 1 sur quatre points particuliers :

Le premier réside dans le fait que la colonne 1 est prévue pour le traitement de solides divisés. On lui fait comporter à cet effet une canalisation d'amenée 23 substantiellement axiale plongeant dans le solvant enrichi renfermé par la chambre 3. Bien entendu l'on pourrait également prévoir une canalisation d'entrée latérale telle que celle 5 de fig. 1, mais à condition de lui donner un diamètre suffisant et une pente assez forte. On notera par ailleurs que, s'agissant de solides, la tubulure de sortie inférieure 12 est réalisée sous la forme d'un sas.

D'autre part la condensation des vapeurs de solvant ne s'effectue plus dans le haut de la chambre 3, mais bien dans un condenseur latéral relié à celle-ci par une canalisation 25 à forte section. Cette disposition présente l'avantage de libérer complètement la chambre 3 qui peut être prévue moins haute.

En troisième lieu l'organe chauffant n'est plus une chemise entourante, mais bien un tube axial 26 qui traverse les plateaux 2 de la partie intéressée de la colonne 1, ce tube étant équipé d'une entrée 27 et d'une sortie 28. Il va d'ailleurs sans dire qu'au lieu d'un tube unique on pourrait prévoir un véritable faisceau tubulaire. La chaleur est ainsi concentrée à l'intérieur de la colonne et moyennant un revêtement calorifuge tel que 29, les pertes thermiques sont réduites. Le revêtement 29 s'étend alors avantageusement sur la totalité de la chambre 3.

Enfin l'on fait arriver la canalisation 19 dans un manchon 30 entourant la tuyère 11 et s'ouvrant au niveau du débouché de celle-ci. Avec une telle disposition le jet de solvant recyclé qui apparaît sous l'effet de la pompe 10 détermine un effet d'éjecteur qui aspire le liquide de la canalisation 19 dont le recyclage se trouve ainsi facilité.

On conçoit que les quatre points décrits ci-dessus sont indépendants les uns des autres et que les variantes qu'ils représentent par rapport à la forme d'exécution de fig. 1 pourraient se mettre en œuvre séparément.

Il doit d'ailleurs être entendu que la description qui précède n'a été donnée qu'à titre d'exemple, et qu'elle ne limite nullement le domaine de l'invention. On doit notamment prévoir une amenée de solvant frais pour compenser les pertes inévitables. Il peut d'autre part être nécessaire de relier le sommet de la colonne à un appareil d'aspiration ou à un évent refroidi pour en éliminer les poches d'air qui gêneraient l'écoulement des vapeurs de solvant.

## Revendications

1. Procédé pour l'extraction d'un soluté à partir d'un produit liquide ou solide divisé, par le moyen d'un solvant plus léger que le produit et comportant un point d'ébullition inférieur à celui du soluté, à l'intérieur d'une colonne pulsée ou non, renfermant un garnissage à plateaux ou autres, et dont la partie haute au moins est chauffée de façon à réaliser un gradient de température ascendant entre son pied et son sommet, le solvant chargé de soluté étant ensuite séparé par distillation et recyclé dans le pied de la colonne, caractérisé en ce que :
— l'on règle le chauffage à une valeur telle qu'il apparaisse vers ce sommet une vaporisation partielle du solvant, l'on recueille les vapeurs ainsi produites et on les condense ;
— et l'on recycle dans le pied de la colonne le condensat ainsi obtenu en même temps que le solvant pur séparé du soluté par distillation extérieurement à la colonne à la façon habituelle.

2. Procédé suivant la revendication 1, caractérisé en ce qu'on opère la condensation des vapeurs de solvant dans la partie supérieure du sommet de la colonne en prévoyant des moyens appropriés pour que le condensat ne retombe pas dans la colonne.

3. Procédé suivant la revendication 1, caractérisé en ce qu'on opère la condensation des vapeurs de solvant dans un condenseur auxiliaire indépendant relié à la partie supérieure du sommet de ladite colonne.

4. Colonne d'extraction pulsée ou non, renfermant un garnissage à plateaux ou autre, destinée à l'extraction d'un soluté à partir d'un produit liquide ou solide divisé, par le moyen d'un solvant plus léger que le produit et comportant un point d'ébullition inférieur à celui du soluté, la partie haute de cette colonne étant chauffée de façon à réaliser un gradient de température ascendant entre son pied et son sommet, tandis que le solvant chargé de soluté est ensuite séparé par distillation extérieurement à la colonne et recyclé dans le pied de celle-ci, caractérisée en ce qu'elle comprend des moyens pour recueillir les vapeurs résultant de la vaporisation partielle du solvant dans sa partie haute, des moyens pour condenser les vapeurs ainsi recueillies et des moyens pour recycler le condensat ainsi obtenu dans son pied avec le solvant pur séparé du soluté.

5. Colonne suivant la revendication 4, caractérisé en ce que le chauffage de sa partie haute est réalisé par le moyen d'une chemise extérieure (14) de type en soi connu.

6. Colonne suivant la revendication 4, dans laquelle la partie haute est chauffée par le moyen d'un échangeur tubulaire parcouru par un fluide chauffant approprié, caractérisée en ce que cet échangeur est réalisé sous la forme d'un tube axial (26).

7. Colonne suivant la revendication 4, caractérisée en ce que sa chambre supérieure (3) comporte une cloison inclinée qui délimite un espace supérieur (3a) tout en ménageant vers son point haut un passage (3b) permettant l'écoulement ascendant des vapeurs de solvant, cet espace supérieur étant équipé de moyens de refroidissement (18) de type connu de façon à jouer le rôle de condenseur. tandis qu'il est prévu une sortie vers le point bas de la cloison (17) pour l'évacuation du condensat.

8. Colonne suivant la revendication 4, caractérisée en ce qu'elle comporte un clapet hydraulique (22) interposé sur sa sortie de solvant enrichi.

9. Colonne suivant la revendication 4, du genre comportant dans sa chambre inférieure une tuyère de recyclage orientée vers le haut et qui reçoit d'une pompe le solvant pur provenant de l'appareil à distiller le solvant enrichi, caractérisée en ce qu'autour de cette tuyère (11) est disposé un manchon (30) qui s'ouvre au niveau du débouché de celle-ci, ce manchon étant relié à la canalisation de recyclage (9) du condensat qui résulte de la condensation des vapeurs de solvant dans la chambre supérieure (3) de la colonne.

## Claims

1. Process for the extraction of a solute from a divided solid or liquid product, by means of a solvent which is lighter than the product and having a boiling point less than that of the solute, on the interior of a column, pulsed or not pulsed, containing a pack of plates or the like, the upper part of which, at least, is heated so as to create a temperature gradient rising between its base and its top, the solvent charged with solute being then separated by distillation and recycled in the base of the column, characterized in that :
— the heating is regulated at a value such that towards this top a partial vaporisation of the solvent appears, the vapours thus produced are collected and condensed ;
— and in the base of the column the condensate thus obtained is recycled at the same time as the pure solvent separated from the solute by distillation on the exterior of the column in the conventional manner.

2. Process according to Claim 1, characterized in that the condensation of the vapours of solvent is operated in the upper part of the top of the column, providing suitable means so that the condensate does not fall back into the column.

3. Process according to Claim 1, characterized in that the condensation of the vapours of solvent is operated in a separate auxiliary condenser connected to the upper part of the top of said column.

4. Extraction column, pulsed or not pulsed, containing a pack of plates or the like, intended for the extraction of a solute from a divided solid or liquid product, by means of a solvent which is lighter than the product and having a boiling point lower than that of the solute, the upper part of this column being heated so as to create a temperature gradient rising between its base and its top, whilst the solvent charged with solute is then separated by distillation on the exterior of the column and recycled in the base of the latter, characterized in that it comprises means to collect the vapours resulting from the partial vaporisation of the solvent in its upper part, means to condense the vapours thus collected and means to recycle the condensate thus obtained in its base with the pure solvent separated from the solute.

5. Column according to Claim 4, characterized in that the heating of its upper part is carried out by means of an external jacket (14) of a type known *per se.*

6. Column according to Claim 4, in which the upper part is heated by means of a tubular exchanger through which a suitable heating fluid runs, characterized in that this exchanger is created in the form of an axial tube (26).

7. Column according to Claim 4, characterized in that its upper chamber (3) comprises an inclined partition which delimits an upper space (3a) whilst providing toward its upper point a passage (3b) which allows the vapours of solvent to flow upward, this upper space being equipped with cooling means (18), of known type, to act as a condenser, whilst an outlet is provided toward the lower point of the partition (17) for the evacuation of the condensate.

8. Column according to Claim 4, characterized in that it comprises a hydraulic valve (22) interposed on its outlet of enriched solvent.

9. Column according to Claim 4, of the type comprising in its lower chamber a recycling nozzle oriented upward, and which receives by a pump the pure solvent originating from the apparatus for the distillation of the enriched solvent, characterized in that around this nozzle (11) a sleeve (30) is arranged which opens at the level of the outlet of the nozzle, this sleeve being connected to the recycling pipe system (9) for the condensate which results from the condensation of the vapours of solvent in the upper chamber (3) of the column.

**Ansprüche**

1. Verfahren zur Extraktion eines Stoffes aus einer Flüssigkeit oder einem zerkleinerten Festkörper mittels eines Lösemittels, in einer pulsierenden oder nicht pulsierenden Kolonne, die Böden oder dergleichen aufweist, wobei das Lösemittel leichter ist als die Flüssigkeit und einen niedrigeren Siedepunkt als denjenigen des Extraktes aufweist, wobei mindestens der obere Teil der Kolonne derart erwärmt wird, daß ein vom Kolonnenfuß zum Kolonnenkopf ansteigender Temperaturgradient gebildet wird und wobei das extrakthaltige Lösungsmittel danach durch Destillation vom Extrakt getrennt und in den Kolonnenfuß zurückgeleitet wird, dadurch gekennzeichnet, daß die Erwärmung auf einen solchen Wert eingestellt wird, daß gegen den Kolonnenkopf hin eine teilweise Verdampfung des Lösemittels eintritt, die so erzeugten Dämpfe gesammelt und kondensiert werden, und dem Fuß der Kolonne das so erhaltene Kondensat gleichlaufend mit dem reinen Lösemittel, das vom Extrakt durch Destillation außerhalb der Kolonne in üblicher Weise getrennt wurde, zugeleitet wird.

2. Verfahren nach Anspruch 1, dadurch gekennzeichnet, daß die Lösemitteldämpfe im oberen Teil des Kolonnenkopfes kondensiert werden, wobei ein Zurückfallen des Kondensates in die Kolonne durch geeignete Mittel verhindert wird.

3. Verfahren nach Anspruch 1, dadurch gekennzeichnet, daß die Kondensation der Lösemitteldämpfe in einem selbstselbständigen Hilfskondensator durchgeführt wird, der an den oberen Teil des Kolonnenkopfes angeschlossen ist.

4. Pulsierende oder nicht pulsierende Extraktionskolonne mit Böden oder dergleichen zur Extraktion eines Stoffes aus einer Flüssigkeit oder einem zerkleinerten Festkörper mittels eines Lösemittels, wobei das Lösemittel leichter ist als die Flüssigkeit und einen niedrigeren Siedepunkt als denjenigen des Extraktes aufweist, wobei der obere Teil dieser Kolonne derart erwärmt wird, daß ein vom Kolonnenfuß zum Kolonnenkopf ansteigender Temperaturgradient gebildet wird und wobei das extrakthaltige Lösemittel danach durch Destillation vom Extrakt außerhalb der Kolonne getrennt und in den Kolonnenfuß zurückgeleitet wird, dadurch gekennzeichnet, daß die Kolonne Mittel zum Sammeln der durch die teilweise Verdampfung des Lösemittels in ihrem oberen Teil entstandenen Dämpfe, Mittel zum Kondensieren der so gesammelten Dämpfe, sowie Mittel zur Rückführung des so erhaltenen Kondensates in ihren Fuß gleichlaufend mit dem vom Extrakt getrennten reinen Lösungsmittel aufweist.

5. Kolonne nach Anspruch 4, dadurch gekennzeichnet, daß die Erwärmung ihres oberen Teils mittels einer äußeren Ummantelung (14) an sich bekannter Bauart erfolgt.

6. Kolonne nach Anspruch 4, in welcher der obere Teil mittels eines röhrenförmigen Wärmetauschers erwärmt wird, der von einer geeigneten Heizflüssigkeit durchströmt wird, dadurch gekennzeichnet, daß dieser Wärmetauscher in Form eines axialen Rohres (26) ausgeführt ist.

7. Kolonne nach Anspruch 4, dadurch gekennzeichnet, daß der Kolonnenkopf eine obere Kammer (3) bildet, von der mittels einer schrägen Zwischenwand ein oberer Raum (3a) unter Freilassen einer Öffnung (3b) im Bereich ihres höchsten Punkts, die das Überströmen der aufsteigenden Lösemitteldämpfe erlaubt, abgegrenzt ist, wobei dieser obere Raum mit an sich bekannten Kühlungsmitteln (18) ausgestattet ist, so daß er die Rolle eines Kondensators erfüllt und wobei ein Ausgang zum Abführen des Kondensats im Bereich des tiefsten Punkts der Zwischenwand (17) vorgesehen ist.

8. Kolonne nach Anspruch 4, dadurch gekennzeichnet, daß ein Flüssigkeitsverschluß vorgesehen ist, der dem Austritt für das angereicherte Lösungsmittel aus der Kolonne nachgeschaltet ist.

9. Kolonne nach Anspruch 4, mit einer den Kolonnenfuß bildenden unteren Kammer, in der ein nach oben gerichtetes Rücklaufrohr für das reine Lösemittel aus der Destillationsvorrichtung des angereicherten Lösemittels angeordnet ist, wobei eine Pumpe dieses Lösemittel fördert und der unteren Kammer zuleitet, dadurch gekennzeichnet, daß um dieses Rücklaufrohr (11) herum eine Hülse (30) angeordnet ist, die sich in der Höhe der Mündung des Rücklaufrohres öffnet und an die Rücklaufleitung (9) für das Kondensat, das sich aus der Kondensation der Lösemitteldämpfe in der oberen Kammer (3) der Kolonne ergibt, angeschlossen ist.

Fig.1

0 049 676

Fig. 2

2